# FASCICULE DE BREVET EUROPEEN

(11) **EP 0 575 259 B1**
(45) Date de publication et mention de la délivrance du brevet: **02.01.1997**
(21) Numéro de dépôt: 93401567.8
(22) Date de dépôt: 18.06.1993
(51) Int. Cl.: H01R 4/64, F16B 3/06, B60M 5/00

(54) **Insert destiné à être rapporté dans un élément pour la fixation d'une cosse de raccordement électrique**
Einsatz, bestimmt für ein Element zur Verbindung einer elektrischen Anschlussklemme
Insert for use in an element for the connection of an electrical terminal

(30) Priorité: 19.06.1992 FR 9207475
(43) Date de publication de la demande: 22.12.1993
(73) Titulaire: DUBUIS Société Anonyme, F-41007 Blois Cedex (FR)
(72) Inventeur: Courtois, Alain, F-41000 Blois (FR); Huet, Jean-Pierre, F-41000 Blois (FR)
(74) Mandataire: Chambon, Gérard

(56) Documents cités:
- EP-A- 0 262 499
- EP-A- 0 328 946
- DE-A- 1 750 905
- FR-A- 560 243
- FR-A- 2 318 694
- GB-A- 214 139
- US-A- 1 748 532
- US-A- 2 248 845

## Description

L'invention concerne un insert destiné à être rapporté dans un élément au moins en partie métallique, pour la fixation d'une cosse de raccordement électrique et notamment dans l'âme d'un rail de voie ferrée pour disposer, par exemple, un capteur ou assurer un contact de masse...

Pour cette application précitée, il est connu d'enfoncer à force dans un perçage de l'âme du rail, une cheville à tête tronconique munie d'une tige filetée extérieurement, la cosse étant maintenue sur ladite tige, par exemple à l'aide d'un écrou.

Il s'agit dans ce cas d'un coincement d'une forme tronconique dans un perçage cylindrique. La cheville est enfoncée par choc et on comprend que ce système connu présente des inconvénients.

En dehors du fait de l'obligation de traverser et de pouvoir accéder des deux côtés de l'élément à équiper (ce qui est bien sûr généralement le cas pour l'âme d'un rail), la structure du rail peut en outre être altérée par les chocs nécessaires à la mise en place des chevilles. De plus, les contacts électriques entre les surfaces en présence ne sont pas toujours très bons.

Il a aussi été imaginé des inserts constitués chacun par une cheville métallique pourvue d'une tête tronconique et d'un prolongement et par une bague métallique à collerette de forme extérieure cylindrique et dont l'alésage intérieur est au moins en partie tronconique, ladite tête étant destinée à être enfilée dans la bague tandis que l'ensemble est prévu pour être introduit dans un trou cylindrique ménagé dans l'élément à équiper.

C'est par exemple le cas des modes de réalisation décrits dans le document GB-A-214139, ou encore dans les documents US-A-1,748,532, US-A-2,248,845 et FR-A-5 602 430.

La collerette est destinée à venir s'appliquer sur l'élément à équiper et à recevoir la cosse de raccordement électrique, à moins qu'elle ne fasse corps avec celle-ci comme dans les trois derniers documents cités où la cosse, la bague et sa collerette sont d'une seule pièce.

Le trou cylindrique ménagé dans l'élément à équiper présente évidemment un diamètre au moins égal à celui du diamètre extérieur de la bague, tandis que la fixation de l'insert est obtenue par expansion de ladite bague lors de l'application d'une force de pénétration exercée sur la cheville.

Pour obtenir l'expansion souhaitée de la bague, toutes celles décrites dans les documents précités sont fendues longitudinalement.

Les inventeurs ont trouvé qu'il était possible d'améliorer considérablement un tel insert en prévoyant une bague sans aucune fente.

Il est surprenant de pouvoir obtenir l'expansion d'une telle bague sans qu'il soit nécessaire d'y ménager des fentes, surtout lorsque celle-ci présente comme ici une collerette, et c'est sans doute pour cela que jusqu'à présent on a toujours imaginé des bagues fendues.

On comprend que lorsqu'il s'agit d'établir un contact électrique, les surfaces en contact sont alors plus importantes qu'avec des bagues fendues. En outre, une bague non fendue améliore l'étanchéité et évite ainsi la corrosion qui est un problème majeur lorsque l'insert se trouve soumis aux intempéries, comme c'est le cas avec les rails de voies ferrées.

Toutefois, il est apparu qu'au voisinage de la collerette, le contact des surfaces entre la bague et la surface interne du perçage de l'élément n'était pas parfait, du fait sans doute de la résistance de la collerette qui empêche une expansion de la matière de la bague à cet endroit. Au lieu de renoncer à la bague sans fente, les inventeurs ont cherché et trouvé la solution à ce problème avec un mode de réalisation qui est défini par les caractéristiques de la revendication 1 et qui est donc remarquable, outre l'absence de fente, en ce que la collerette est pourvue d'une gorge annulaire qui est ménagée au niveau de son raccordement avec la surface extérieure cylindrique de la bague et qui s'évase vers l'extérieur.

Pour éviter une déformation de la collerette, l'alésage intérieur de la bague présente une partie tronconique qui se prolonge au niveau de la collerette, par un alésage cylindrique.

La matière utilisée aura bien sûr une influence sur le résultat et une matière dont la malléabilité est tout à fait indiquée pour la bague est l'acier inoxydable. Toutefois, d'autres métaux malléables sont possibles et peuvent même être recommandés selon les applicacomme le cuivre, l'aluminium, etc, et en particulier la bague est en alliage cuivreux tandis qu'elle est étamée sur au moins la face interne de son alésage.

Après mise en place on obtient une cohésion parfaite entre les métaux constitutifs de la cheville et de la bague, ce qui présente un intérêt évident pour les applications électriques.

D'une manière générale le prolongement de la tête de la cheville est pourvue d'un moyen de prise pour un outil de manière à assurer l'application de la force de pénétration de ladite cheville en exerçant sur ledit prolongement une force de traction.

Ainsi à l'aide d'un outil convenable, la mise en place est particulièrement aisée et sans aucun choc.

Par exemple, le prolongement de la tête de la cheville est pourvu d'un filetage extérieur qui permet la fixation de l'outil, mais sert en outre aussi de moyen de fixation de la cosse.

S'il s'agissait de prévoir seulement un moyen pour l'outil de mise en place, on peut bien sûr imaginer aussi un prolongement en forme de douille à filetage intérieur, une gorge annulaire...

Avantageusement la cheville et la bague sont pré-assemblées l'une dans l'autre avant utilisation par un léger coincement pour faciliter l'introduction de l'ensemble.

On comprend en effet qu'un tel insert peut avantageusement être mis en place en ayant accès que d'un seul côté et en conséquence il peut s'agir d'une paroi mince ou épaisse, d'un corps plein...

Dans le cas d'une utilisation pour paroi mince, la longueur de la bague est par exemple un peu supérieure à l'épaisseur de la paroi de manière à ce que l'insert dépasse légèrement ladite paroi du côté opposé au prolongement de la cheville. Ainsi on peut entre autre assurer de ce côté une certaine étanchéité. C'est généralement le cas pour l'application de l'invention à la fixation d'une cosse à l'âme d'un rail de voie ferrée, mais il est clair que l'invention n'est pas limitée à ce type d'application, l'élément à équiper pouvant être la partie du châssis d'un véhicule, etc.

L'invention sera bien comprise à la lecture de la description qui va suivre et qui se refère aux dessins annexés dans lesquels:
- la figure 1 montre l'ensemble des deux pièces formant l'insert sert avant utilisation (la bague étant représentée en coupe),
- la figure 2 montre la cheville de la figure 1,
- la figure 3 est une coupe de la bague de la figure 1,
- la figure 4 correspond à la figure 1 après mise en place de l'insert dans un élément à équiper,
- la figure 5 montre l'insert selon l'invention dans une application particulière,
- la figure 6 schématise le démontage de l'insert.

L'insert 1 selon l'invention est constitué par une cheville 2, par exemple en acier inoxydable, et une bague 3 en alliage cuivreux ou autre métal approprié.

La cheville 2 présente une tête 2a de forme tronconique et un prolongement sous forme d'une tige cylindrique 2b filetée extérieurement.

La bague 3 comporte une partie tubulaire 3a non fendue et une collerette 3b.

La partie tubulaire 3a présente une forme extérieure cylindrique et un alésage intérieur en partie 3'a tronconique qui s'ouvre du côté opposé à la collerette et dont la conicité est la même que celle de la tête 2a de la cheville 2. La surface intérieure de cet alésage peut avantageusement recevoir un dépôt électrolytique d'étain pour faciliter le coulissement avec la cheville et/ou améliorer le contact électrique et/ou assurer une protection contre la corrosion.

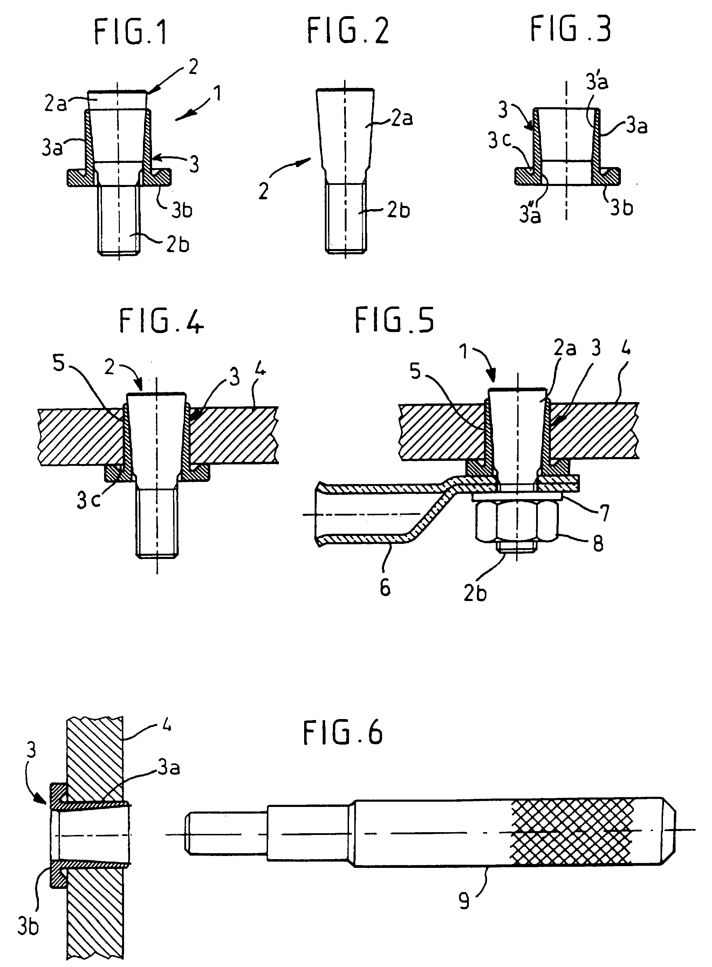

On peut également voir sur les dessins et plus particulièrement sur la figure 3, que la partie tronconique 3'a de l'alésage de la bague se prolonge par une partie cylindrique 3"a au niveau de la collerette 3b, tandis qu'une gorge annulaire 3c est ménagée au niveau du raccordement de ladite collerette avec la surface extérieure cylindrique de la bague, pour des raisons déjà évoquées et qui seront de nouveau rappelées ci-après. Cette gorge 3c qui est donc ménagée sous la collerette présente, par exemple, une profondeur comprise entre le quart et la moitié de l'épaisseur de la collerette tandis que, comme le montrent les dessins, ladite gorge s'évase vers l'extérieur.

Dans l'exemple représenté, l'insert 1 selon l'invention est destiné à équiper un élément 4 métallique (figures 4 et 5) sous forme ici d'une paroi plane et mince constituant par exemple l'âme d'un rail de voie ferrée.

Avant utilisation, l'insert selon l'invention se présente sous la forme représentée sur la figure 1, la cheville 2 étant déjà introduite et coincée dans la bague 3, grâce aux formes tronconiques conjuguées de la tête 2a et de l'alésage 3'a de la bague 3.

Pour la mise en place, il suffit d'introduire l'ensemble représenté à la figure 1, dans un perçage 5 cylindrique (figures 4 et 5) ménagé dans l'élément 4, dont le diamètre est au moins égal à celui du diamètre extérieur de la partie tubulaire 3a de la bague 3, l'insert selon l'invention permettant une assez grande tolérance sur le diamètre de ce perçage.

L'introduction précitée est effectuée jusqu'à ce que la collerette 3b de la bague s'applique sur l'élément 4.

Il suffit ensuite d'exercer une traction sur la tige filetée 2b de la cheville pour entraîner une expansion diamétrale de la bague 3 au cours de la pénétration de la cheville.

La traction exercée sur la tige filetée 2b est avantageusement effectuée au moyen d'un outil hydraulique, muni par exemple d'un tiroir dans lequel la tige filetée 2b est vissée.

Les éléments 2 et 3 prennent alors la forme et les positions représentées sur les figures 4 et 5.

Dans l'exemple représenté, la partie tubulaire 3a de la bague est un peu plus longue que l'épaisseur de l'élément 4, de telle sorte que l'insert 1 dépasse légèrement de l'autre côté dudit élément bouchant ainsi de façon étanche le perçage dont il est pourvu.

La partie cylindrique 3"a de l'alésage de la bague empêche toute déformation de la collerette 3b qui s'applique bien sur l'élément 4. En outre, la gorge annulaire 3c permet une bonne expansion de la bague sur toute sa partie tubulaire jusqu'au voisinage de la collerette.

Pour l'application représentée à la figure 5, la tige filetée 2b sert également de moyen de fixation pour une cosse 6 de raccordement électrique fixée sur ladite tige entre la collerette 3b de la bague et une rondelle 7 bloquée par un écrou 8 de serrage, tous les deux également en acier inoxydable (ladite cosse 6 pourrait toutefois faire corps avec la collerette et la bague).

On comprend que le serrage de l'écrou 7 ne peut agir que dans le sens de l'expansion diamétral de la bague.

Pour l'application envisagée, on comprend aussi que les formes coniques de la cheville et de la bague, les formes cylindriques de l'extérieur de la bague et de l'intérieur du perçage assurent de grandes surfaces de contact électrique. Le courant électrique pouvant par ailleurs circuler par la tige filetée 2b de la cheville mais aussi par l'écrou 8 de serrage, la rondelle 7 et la collerette 3b, cette dernière assurant un bon contact par sa face extérieure avec la cosse 6, tandis que sa face tournée vers l'élément 4 n'est pas la zone principale de contact électrique étant donné généralement le mauvais état de surface dudit élément, de telle sorte que la gorge 3c n'entraîne pas d'inconvénient à ce propos.

Comme déjà dit, pour le montage, un outil approprié de traction est utile, mais la mise en place de l'écrou et un serrage convenable pourrait éventuellement suffire dans certains cas.

Afin que la collerette 3b s'applique correctement sur l'élément 4, on peut envisager d'utiliser un outil magnétique de mise en place qui forcerait ledit outil vers ledit élément 4.

En cas de besoin, il est simple de retirer un tel insert. Il suffit en effet, après avoir chassé la cheville 2 en frappant sur sa tige filetée 2b, de retirer la bague 3, à l'aide par exemple d'un outil du type "chasse goupille", tel que représenté en 9 sur la figure 6, en frappant sur ladite bague en sens opposé par rapport au sens dans lequel on frappe sur la tige filetée.

Contrairement au mode de réalisation représenté, on comprend, comme déjà dit, qu'un insert selon l'invention peut être introduit dans un élément plus épais dans lequel le perçage ne traverserait pas entièrement ledit élément, par exemple pour une fixation dans le pied du rail.

En outre, si l'on a décrit une cosse 6 distincte de la bague 3, il est clair que celle-ci peut être d'une seule pièce avec la bague et sa collerette.

## Revendications

1. Insert (1) destiné à être rapporté dans un élément (4) pour la fixation d'une cosse (6) de raccordement électrique, et qui est constitué par une cheville (2) métallique pourvue d'une tête tronconique (2a) et d'un prolongement (2b) et par une bague (3) métallique à collerette (3b) de forme extérieure cylindrique et dont l'alésage intérieur est au moins en partie (3'b) tronconique, ladite tête étant destinée à être enfilée dans la bague tandis que l'ensemble est prévu pour être introduit dans un trou cylindrique (5) ménagé dans l'élément (4) à équiper, insert caractérisé en ce que la bague (3) ne présente aucune fente et que sa collerette (3b) est pourvue d'une gorge annulaire (3c) qui est ménagée au niveau de son raccordement avec la surface extérieure cylindrique de ladite bague (3) et qui s'évase vers l'extérieur.

2. Insert selon la revendication 1, caractérisé en ce que l'alésage intérieur de la bague (3) présente une partie tronconique (3'a) qui se prolonge au niveau de la collerette (3b), par un alésage cylindrique (3"a).

3. Insert selon l'une des revendications 1 et 2, caractérisé en ce que la bague est en alliage cuivreux tandis qu'elle est étamée sur au moins la face interne de son alésage.

4. Insert selon l'une des revendications 1 à 3, caractérisé en ce que le prolongement (2b) de la tête (2a) de la cheville est pourvue d'un moyen de prise pour un outil de manière à assurer l'application de la force de pénétration de ladite cheville en exerçant sur ledit prolongement une force de traction.

5. Insert selon l'une des revendications 1 à 4 caractérisé en ce que la cheville (2) et la bague (3) sont pré-assemblées l'une dans l'autre avant utilisation par un léger coincement pour faciliter l'introduction de l'ensemble.

6. Insert selon l'une des revendications 1 à 5 mis en place dans une paroi (4), caractérisé en ce que la longueur de la bague (3) est un peu supérieure à l'épaisseur de la paroi (4) de manière à ce que l'insert dépasse légèrement ladite paroi du côté opposé au prolongement (2b) de la cheville.

7. Insert selon l'une des revendications 1 à 6, disposé dans l'âme (4) d'un rail de voie ferrée et dont le prolongement (2b) est muni d'un filetage extérieur, caractérisé en ce que ledit prolongement (2b) fileté combiné avec un écrou (8) sert de moyen de fixation pour la cosse (6) de raccordement électrique.

## Patentansprüche

1. Einsatz (1 ) zum Einsetzen in ein Element (4) zur Befestigung einer elektrischen Anschlußklemme (6), der von einem mit einem kegelstumpfförmigen Kopf (2a) und einem Fortsatz (2b) versehenen Metallstift (2) und einem metallischen Ring (3) mit einem Bund (3b) von äußerer zylindrischer Form gebildet wird, dessen innere Bohrung wenigstens in einem Teilbereich (3'b) kegelstumpfförmig ist, wobei der Kopf in den Ring einführbar ist, während die Gesamtanordnung in ein zylindrisches Loch (5) einsteckbar ist, das in dem mit dem Einsatz zu versehenden Element (4 ) angeordnet ist, und der Einsatz dadurch gekennzeichnet ist, daß der Ring (3) nicht geschlitzt und sein Bund (3b) mit einer ringförmigen Auskehlung (3c) versehen ist, die in Höhe seiner Verbindung mit der äußeren zylindrischen Oberfläche des Ringes (3) vorgesehen ist und sich nach außen erweitert.

2. Einsatz nach Anspruch 1, dadurch gekennzeichnet, daß die Innenbohrung des Ringes (3) einen kegelstumpfförmigen Bereich (3'a) aufweist, der in Höhe des Bundes (3b) durch eine Zylinderbohrung (3"a) verlängert ist.

3. Einsatz nach einem der Ansprüche 1 und 2, dadurch gekennzeichnet, daß der Ring aus einer Kupferlegierung besteht und auf wenigstens der Innenseite seiner Bohrung verzinnt ist.

4. Einsatz nach einem der Ansprüche 1 bis 3, dadurch gekennzeichnet, daß der Fortsatz (2b) des Stiftes (2a) mit einem Anschlußmittel für ein Werkzeug versehen ist derart, daß die Anwendung einer Eindringkraft des Stifts gewährleistet ist, indem eine Zugkraft auf den Fortsatz ausgeübt wird.

5. Einsatz nach einem der Ansprüche 1 bis 4, dadurch gekennzeichnet, daß Stift (2) und Ring (3) vor Gebrauch durch Ineinanderstecken und eine leichte Verklemmung vormontiert sind, um das Einstecken der Gesamtanordnung zu erleichtern.

6. Einsatz nach einem der Ansprüche 1 bis 5, der in einer Wandung (4) angeordnet ist, dadurch gekennzeichnet, daß die Länge des Ringes (3) geringfügig größer als die Wanddicke (4) ist derart, daß der Einsatz die Wandung an der dem Fortsatz (2b) des Stiftes gegenüberliegenden Seite leicht überragt.

7. Einsatz nach einem der Ansprüche 1 bis 6, der im Steg (4) einer Eisenbahnschiene angeordnet ist, wobei der Fortsatz (2b) mit einem Außengewinde versehen ist, dadurch gekennzeichnet, daß der mit Außengewinde versehene Fortsatz (2b) zusammen mit einer Mutter (8) als Befestigungsmittel für die elektrische Anschlußklemme (6) dient.

## Claims

1. An insert (1) intended to be connected into an element (4) for the fixing of an electrical connection terminal (6), and which is made up from a metal plug (2) provided with a tapered head (2a) and an extension (2b) and by a metal ring (3) with a collar (3b) with an outer cylindrical shape and whose inner bore is tapered at least in part (3'b), the said head being intended to be threaded in the ring while the assembly is foreseen to be introduced into a cylindrical hole (5) arranged in the element (4) to be equipped, the insert characterised in that the ring (3) has no split and in that its collar (3b) is provided with an annular groove (3c) which is arranged at the level of its connection with the outer cylindrical surface of the said ring (3) and which opens outwardly.

2. An insert in accordance with claim 1, characterised in that the inner bore of the ring (3) has a tapered part (3'a) which extends at the level of the collar (3b), through a cylindrical bore (3"a).

3. An insert in accordance with claims 1 and 2, characterised in that the ring is in copper alloy while it is tin coated on at least the internal face of its bore.

4. An insert in accordance with one of claims 1 to 3, characterised in that the extension (2b) of the head (2a) of the plug is provided with gripping means for a tool so as to assure the application of the force of penetration of the said plug on exercising a traction force on the said extension.

5. An insert in accordance with one of claims 1 to 4 characterised in that the plug (2) and the ring (3) are preassembled inside one another before use with a light clamping in order to facilitate the introduction of the assembly.

6. An insert in accordance with one of claims 1 to 5 installed in a wall (4), characterised in that the length of the ring (3) is a little greater than the thickness of the wall (4) so that the insert slightly projects through the said wall on the side opposite the extension (2b) of the plug.

7. An insert in accordance with one of claims 1 to 6, arranged in the web (4) of a rail of a railway track and whose extension (2b) is equipped with an external thread, characterised in that the said threaded extension (2b) combined with a nut (8) serves as fixing means for the electrical connection terminal (6).
